# EUROPÄISCHE PATENTSCHRIFT

(11) **EP 1 458 110 B1**
(45) Veröffentlichungstag und Bekanntmachung des Hinweises auf die Patenterteilung: **18.08.2010**
(21) Anmeldenummer: 04000563.9
(22) Anmeldetag: 14.01.2004
(51) Int. Cl.: H04B 1/38

(54) **Mobilfunkendgerät**
Mobile radio communication terminal
Terminal mobile de communication radio

(30) Priorität: 11.03.2003 DE 10311675
(43) Veröffentlichungstag der Anmeldung: 15.09.2004
(60) Teilanmeldung: 10006903.8
(73) Patentinhaber: Aastra DeTeWe GmbH, 10997 Berlin (DE)
(72) Erfinder: Balow, Peter, Dipl.-Ing., 12559 Berlin (DE); Petersen, Mike, Dipl.-Ing., 24582 Wattenbek (DE)
(74) Vertreter: Fischer, Uwe

(56) Entgegenhaltungen:
- EP-A- 1 061 718
- EP-A- 1 088 406
- DE-A- 19 617 509
- US-A- 4 731 814
- US-B1- 6 366 572
- "Radio Equipment and Systems (RES); Digital Enhanced Cordless Telecommunications (DECT); Common Interface (CI); Part 3: Medium Access Control (MAC) layer; ETS 300 175-3" ETSI STANDARDS, EUROPEAN TELECOMMUNICATIONS STANDARDS INSTITUTE, SOPHIA-ANTIPO, FR, Bd. DECT, Nr. Second Edition, September 1996 (1996-09), XP014012241 ISSN: 0000-0001

## Beschreibung

Die Erfindung bezieht sich auf ein Mobilfunkendgerät mit einer Sendeeinrichtung, die zumindest nach einem vorgegebenen Mobilfunkstandard, insbesondere beispielsweise nach dem DECT-Standard, arbeitet.

Derartige Mobilfunkendgeräte sind allgemein bekannt und im Handel erhältlich.

Ein Mobilfunkendgerät mit den Merkmalen gemäß dem Oberbegriff des Anspruchs 1 ist aus der deutschen Offenlegungsschrift DE 196 17 509 A1 bekannt. Die Schrift offenbart, dass eine Sprachsignalübertragung automatisch abgeschaltet wird, sobald ein Mobilteil zurück in die Ladeschale gelegt wird. Durch diese Maßnahme soll verhindert werden, dass weiterhin Gebühren berechnet werden, obwohl das Gespräch beendet ist.

In der US-Patentschrift 4,731,814 ist ein Schlafmodus offenbart, in den ein Mobilteil versetzt werden kann, wenn keine Sprachsignalübertragung stattfindet. Dieser Schlafmodus wird aktiviert, wenn sich das Mobilteil außerhalb der Ladeschale befindet.

Der Erfindung liegt die Aufgabe zugrunde, Mobilfunkendgeräte der eingangs angegebenen Art zu verbessern; insbesondere soll die gesundheitliche Belastung bei der Benutzung derartiger Geräte reduziert werden.

Diese Aufgabe wird erfindungsgemäß durch die kennzeichnenden Merkmale des Anspruchs 1 gelöst. Vorteilhafte Ausgestaltungen des erfindungsgemäßen Mobilfunkendgeräts sind in Unteransprüchen angegeben.

Ein wesentlicher Vorteil des erfindungsgemäßen Mobilfunkendgerätes ist darin zu sehen, dass dieses zu einer insgesamt geringeren gesundheitlichen Belastung für einen Benutzer des Mobilfunkendgerätes führt, als dies bei den bisher bekannten und im Handel erhältlichen Mobilfunkendgeräten der Fall ist. Dies wird konkret dadurch erreicht, dass das erfindungsgemäße Mobilfunkendgerät mindestens eine weitere Betriebsart aufweist, bei der weniger elektromagnetische Strahlung erzeugt wird als im Normalbetrieb. Je nach den Erfordernissen im Einzelfall kann das Mobilfunkendgerät somit in der Normalbetriebsart betrieben werden, wenn dies erforderlich ist - beispielsweise bei schlechten Empfangsbedingungen oder dergleichen - oder wahlweise stattdessen in der weiteren Betriebsart, bei der weniger Strahlung erzeugt wird. Die weitere Betriebsart mit reduzierter Strahlung kann dann also eingeschaltet bzw. eingesetzt werden, sobald dies im Einzelfall möglich ist. Die weitere Betriebsart könnte somit beispielsweise als "Öko-Betrieb" bzw. "Gesundheitsbetrieb" bezeichnet werden.

Gemäß der Erfindung ist vorgesehen, dass das Mobilfunkendgerät derart ausgestaltet ist, dass die Sendeeinrichtung abgeschaltet wird, sobald das Mobilfunkendgerät mit einer Ladeschale einer dem Mobilfunkendgerät zugeordneten Basisstation in Verbindung tritt. Sobald die Sendeeinrichtung abgeschaltet ist, befindet sich das Mobilfunkendgerät damit in einer "weiteren" Betriebsart, die sich von dem Normalbetrieb dadurch unterscheidet, dass die Sendeeinrichtung abgeschaltet ist und kein Sendebetrieb mehr stattfindet. Ein wesentlicher Vorteil des Mobilfunkendgerätes ist darin zu sehen, dass auf das Erzeugen "unnützer" elektromagnetischer Strahlung vollkommen verzichtet wird. Befindet sich das Mobilfunkendgerät nämlich in der Ladeschale, so ist keine Funkverbindung zwischen dem Mobilfunkendgerät und der der Ladeschale zugeordneten Basisstation erforderlich, da eine elektrische Verbindung zwischen dem Mobilfunkendgerät und der Basisstation beispielsweise über die vorhandenen Ladekontakte besteht und diese zur Übertragung von Datensignalen - beispielsweise auch Synchronisationssignalen - benutzt werden können.

Zum Abschalten der Sendeeinrichtung in der weiteren Betriebsart kann das Mobilfunkendgerät vorteilhaft einen mechanischen Schaltkontakt bzw. eine Software-seitige Erkennung und Umschaltung aufweisen, der bzw. die bei Auflegen des Mobilfunkendgerätes auf der Ladeschale bzw. beim Einfügen des Mobilfunkendgeräts in die Ladeschale der Basisstation die Sendeeinrichtung elektrisch abschaltet.

Alternativ kann die Sendeeinrichtung des Mobilfunkendgerätes abgeschaltet werden, sobald die Ladekontakte des Mobilfunkendgerätes mit den Ladekontakten der Basisstation elektrisch kontaktieren. Beispielsweise kann das Mobilfunkendgerät seine Sendeeinrichtung abschalten, sobald ein Ladestrom von der Ladeschale zu dem Mobilfunkendgerät fließt. Konkret kann das Abschalten der Sendeeinrichtung in dem Mobilfunkendgerät beispielsweise durch eine Überwachungsschaltung erfolgen, die den Ladestrom des Mobilfunkendgerätes überwacht und bei Fließen eines Stromes die Sendeeinrichtung deaktiviert.

Darüber hinaus kann das Mobilfunkendgerät der Basisstation - beispielsweise über die Ladekontakte und/oder über separate Zusatzkontakte mitteilen, dass es in der Ladestation liegt und dass seine Sendeeinrichtung ausgeschaltet ist. Falls an der Basisstation lediglich ein einziges Mobilfunkendgerät angemeldet sein sollte - nämlich somit das in der Ladeschale liegende - , könnte die Basisstation dann ihrerseits ihre Sendeeinrichtung ebenfalls abschalten.

Alternativ kann die Basisstation den Ladestrom der Ladeschale selbst überwachen und bei Vorliegen eines Ladestroms ihre eigene Sendeeinrichtung ausschalten; in diesem Fall übermittelt die Basisstation - beispielsweise über die Ladekontakte und/oder über zusätzliche Kontakte - dem Mobilfunkendgerät dann ein Steuersignal zum Abschalten der mobilfunkendgeräteseitigen Sendeeinrichtung, woraufhin das Mobilfunkendgerät dann seine Sendeeinrichtung abschaltet. Für diese Ausgestaltung der Erfindung muss das Mobilfunkendgerät somit geeignet sein, ein solches Steuersignal der Basisstation zu erkennen und bei Vorliegen eines solchen Steuersignals seine Sendeeinrichtung abzuschalten.

Ein Aktivieren der zuvor deaktivierten Sendeeinrichtung kann dabei beispielsweise von der Basisstation initiiert werden, indem sie ein Aufwecksignal generiert und elektrisch zum Mobilfunkendgerät überträgt. Um ein solches Aufwecken zu ermöglichen, ist das Mobilfunkendgerät bevorzugt derart ausgestaltet, dass es bei Vorliegen eines von der Basisstation generierten und elektrisch zum Mobilfunkendgerät übertragenen Aufwecksignals den Sendebetrieb wieder aufnimmt. Eine Synchronisation zwischen dem "aufgeweckten" Mobilfunkendgerät und der Basisstation kann dabei beispielsweise auf dem "Funkwege" erfolgen; stattdessen ist es auch möglich, dass eine Synchronisation über elektrische Synchronisationssignale erfolgt, die zwischen dem in der Ladeschale befindlichen Mobilfunkendgerät und der Basisstation auf elektrischem Wege (z. B. über eine Kabelverbindung) ausgetauscht werden.

Die Übertragung des Aufwecksignals von der Basisstation zu dem Mobilfunkendgerät kann vorzugsweise über die Ladekontakte erfolgen; werden nämlich die Ladekontakte zur Übertragung des Aufwecksignals verwendet, so kann auf zusätzliche Kontakte zur Übertragung des Aufwecksignals verzichtet werden. Zusammengefasst lässt sich somit feststellen, dass das Mobilfunkendgerät sich dadurch auszeichnet, dass in der weiteren Betriebsart - also in der Betriebsart mit reduzierter Abstrahlung elektromagnetischer Wellen - die Sendeeinrichtung des Mobilfunkendgerätes vollkommen abgeschaltet wird, sobald sich das Mobilfunkendgerät in der Ladeschale seiner Basisstation befindet.

Vorzugsweise ist vorgesehen, dass das Mobilfunkendgerät derart ausgestaltet ist, dass es mit zumindest zwei Sendeleistungspegeln betrieben werden kann, wobei der jeweilige Sendeleistungspegel von der Empfangsqualität der Verbindung zwischen dem Mobilfunkendgerät und der Basisstation bestimmt wird.

Das Umschalten des Sendeleistungspegels kann dabei beispielsweise von der Basisstation vorgegeben sein; hierzu ist das Mobilfunkendgerät vorzugsweise derart auszugestalten, dass es nach einem Empfangen eines Steuersignals der Basisstation den jeweils von der Basisstation mittels des Steuersignals vorgegebenen Sendeleistungspegel einstellt.

Alternativ kann der jeweilige Sendeleistungspegel des Mobilfunkendgerätes aber auch unmittelbar von-dem Mobilfunkendgerät selbst bestimmt werden. Dies- lässt sich besonders einfach und damit vorteilhaft dann erreichen, wenn das Mobilfunkendgerät die jeweilige Empfangsqualität der von der Basisstation gesendeten und vom Mobilfunkendgerät empfangenen Signale misst und den Sendeleistungspegel entsprechend derart einstellt, dass bei schlechter Empfangsqualität ein hoher Sendeleistungspegel und bei guter Empfangsqualität ein niedriger Sendeleistungspegel ausgewählt wird.

Als Maß für die Empfangsqualität kann dabei der Signalpegel des Empfangssignals herangezogen werden; vorteilhaft wird die Höhe des Signalpegels des Empfangssignals unmittelbar als Maß für die Empfangsqualität interpretiert und als solche bewertet.

Zusammengefasst lässt sich damit feststellen, dass bei der vorteilhaften Ausgestaltung des Mobilfunkendgerätes die von dem Mobilfunkendgerät erzeugte Sendeleistung abhängig von der "Empfangsstrecke" zwischen dem Mobilfunkendgerät und der Basisstation gewählt wird; bei schlechten Übertragungsbedingungen, also bei einer schlechten oder sehr langen Übertragungsstrecke, wird mit hoher Sendeleistung gesendet, wohingegen bei einer guten - insbesondere kurzen - Übertragungsstrecke eine niedrige Sendeleistung gewählt wird.

Gemäß einer anderen vorteilhaften Ausgestaltung des Mobilfunkendgerätes ist vorgesehen, dass das Mobilfunkendgerät während eines Telefonates ausschließlich dann elektromagnetische Strahlung erzeugt, wenn benutzerseitig Sprachsignale erzeugt werden. Bei dieser Variante der Erfindung wird also auf das Übersenden "unnützer" elektromagnetischer Strahlung verzichtet, indem das Aussenden der Strahlung ausschließlich auf die Zeitbereiche beschränkt wird, in denen tatsächlich "Nutzdaten" bzw. "Nutzsprachsignale" zu übertragen sind.

Bevorzugt weist das Mobilfunkendgerät hierfür eine Sprachfiltereinrichtung (beispielsweise eine Spracherkennungseinrichtung) auf, die Sprachsignale von übrigen akustischen Signalen - wie z. B. "Hintergrundrauschen" - trennt und ausschließlich die Sprachsignale an die Sendeeinrichtung weiterleitet.

Bei dieser letztgenannten Ausgestaltung ist also vorgesehen, das Aussenden elektromagnetischer Strahlung auf die Zeitbereiche zu beschränken, in denen "Nutzsignale" tatsächlich zu übertragen sind; ansonsten wird das Mobilfunkendgerät "stumm" geschaltet.

Die Erfindung bezieht sich außerdem auf eine Basisstation mit einer Sendeeinrichtung, die nach einem vorgegebenen Funkstandard, insbesondere dem DECT-Standard, arbeitet.

Der Erfindung liegt bezüglich einer solchen Basisstation die Aufgabe zugrunde, diese zu verbessern; insbesondere soll die gesundheitliche Belastung bei der Benutzung derartiger Basisstationen reduziert werden.

Diese Aufgabe wird erfindungsgemäß durch die kennzeichnenden Merkmale des Anspruchs 5 gelöst. Vorteilhafte Ausgestaltungen der erfindungsgemäßen Basisstation sind in auf den Anspruch 5 rückbezogenen Unteransprüchen beschrieben.

Ein wesentlicher Vorteil der erfindungsgemäßen Basisstation ist darin zu sehen, dass diese in eine weitere Betriebsart umgeschaltet werden kann, in der weniger Strahlungsleistung als üblicherweise erzeugt wird. In dieser weiteren Betriebsart ist die Strahlungsbelastung somit für sich in der Nähe der Basisstation befindliche Personen geringer als in der Normalbetriebsart.

Gemäß einer ersten vorteilhaften Ausgestaltung der Basisstation ist vorgesehen, dass im Falle eines Sendebetriebs nach dem DECT-Standard die Sendebursts in der weiteren Betriebsart ausschließlich auf die Frames 0 und 8 beschränkt werden. Ein Senden innerhalb der Frames 0 und 8 ist erforderlich, wenn eine Synchronisation zwischen den Mobilfunkendgeräten und der Basisstation aufrechterhalten werden soll. Über die Frames 0 und 8 können beispielsweise Qt-Meldungen übertragen werden.

Im Ergebnis sendet die Basisstation somit lediglich alle 80 ms Informationen aus, so dass es zu einer sehr reduzierten Ausstrahlung elektromagnetischer Strahlung kommt. Dabei wird jedoch aufgrund des Aussendens von Sendebursts in den Frames 0 und 8 sichergestellt, dass eine Synchronisation zwischen der Basisstation und den Mobilfunkendgeräten aufrecht erhalten bleibt.

Gemäß einer zweiten vorteilhaften Ausgestaltung der Basisstation ist vorgesehen, dass diese ausschließlich einmal in der Sekunde elektromagnetische Strahlung erzeugt. Bei entsprechender Anpassung der Synchronisationsalgorithmen ist es nämlich möglich, eine Synchronisation zwischen der Basisstation und den Mobilfunkendgeräten selbst dann zu erreichen, wenn eine Synchronisation nur einmal pro Sekunde erfolgt.

Gemäß einer dritten vorteilhaften Ausgestaltung der Basisstation ist vorgesehen, dass diese mit zumindest zwei Sendeleistungspegeln betrieben werden kann, wobei der jeweilige Sendeleistungspegel von der Empfangsqualität der Verbindung zwischen dem Mobilfunkendgerät bzw. den Mobilfunkendgeräten und der Basisstation bestimmt wird.

Vorzugsweise misst die Basisstation die jeweilige Empfangsqualität der von dem oder den Mobilfunkendgeräten empfangenen Signalen und stellt den Sendeleistungspegel entsprechend derart ein, dass bei schlechter Empfangsqualität ein hoher Sendeleistungspegel und bei guter Empfangsqualität ein niedrigerer Leistungspegel ausgewählt wird.

Besonders einfach und damit vorteilhaft kann zur Bestimmung der Empfangsqualität der Signalpegel der Empfangssignale herangezogen werden. Beispielsweise kann die Höhe der empfangenen Signalpegel unmittelbar als Maß für die Empfangsqualität interpretiert und bewertet werden.

Die Information bzw. das entsprechende Signal, dass sich das Mobilfunkendgerät in der Ladeschale der Basisstation befindet, kann dabei von dem Mobilfunkendgerät erzeugt und an die Basisstation - beispielsweise über die Ladekontakte und/oder über zusätzliche Kontakte - übertragen werden.

Alternativ kann die Basisstation den Ladestrom der Ladeschale selbst überwachen und bei Vorliegen eines Ladestroms ihre Sendeeinrichtung ausschalten. Darüber hinaus kann die Basisstation - beispielsweise über die Ladekontakte und/oder über zusätzliche Kontakte - dem Mobilfunkendgerät ein Steuersignal zum Abschalten der mobilfunkendgeräteseitigen Sendeeinrichtung übermitteln, woraufhin das Mobilfunkendgerät dann seine Sendeeinrichtung abschaltet.

Zur Erläuterung der Erfindung zeigen:
- Fig. 1: ein Ausführungsbeispiel für ein erfindungsgemäßes Mobilfunkendgerät;
- Fig. 2: ein zweites Ausführungsbeispiel für ein erfindungsgemäßes Mobilfunkendgerät;
- Fig. 3: ein Ausführungsbeispiel für eine vorteilhafte Ausgestaltung des Mobilfunkendgeräts;
- Fig. 4: ein weiteres Ausführungsbeispiel für eine vorteilhafte Ausgestaltung des Mobilfunkendgeräts;
- Fig. 5: ein weiteres Ausführungsbeispiel für eine vorteilhafte Ausgestaltung des Mobilfunkendgeräts und
- Fig. 6: ein Ausführungsbeispiel für eine erfindungsgemäße Basisstation.

In den Figuren werden für alle identischen bzw. vergleichbaren Komponenten dieselben Bezugszeichen verwendet.

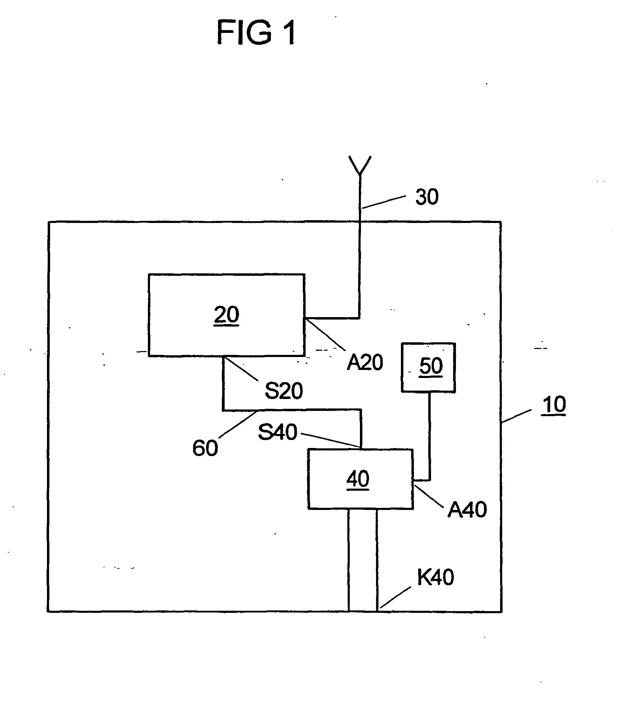

In der Figur 1 erkennt man ein Mobilfunkendgerät 10 mit einer Sende-/Empfangseinrichtung 20. Ein Antennenanschluss A20 der Sende-/Empfangseinrichtung 20 ist mit einer Antenne 30 des Mobilfunkendgerätes verbunden. Ein Steueranschluss S20 der Sende- und Empfangseinrichtung 20 ist mit einem Steueranschluss S40 einer Steuereinrichtung 40 verbunden. Die Steuereinrichtung 40 weist darüber hinaus Ladekontakte K40 auf, mit denen das Mobilfunkendgerät 10 an Ladekontakte einer Ladeschale einer in der Figur 1 nicht gezeigten Basisstation anschließbar ist.

Die Steuereinrichtung 40 ist darüber hinaus über ihren Akkuanschluss A40 an einen Akkumulator bzw. eine Batterie 50 angeschlossen.

Das Mobilfunkendgerät gemäß der Figur 1 wird wie folgt betrieben. Sobald das Mobilfunkendgerät 10 in eine Ladeschale einer in der Figur 1 nicht dargestellten Basisstation eingelegt wird, fließt über die Ladekontakte K40 und die Steuereinrichtung 40 ein Ladestrom zum Akku 50. Sobald ein solcher Ladestrom von der Steuereinrichtung 40 detektiert wird, schaltet die Steuereinrichtung 40 die Sende-/Empfangseinrichtung 20 über die Steuerleitung 60 ab, so dass keine elektromagnetische Sendestrahlung mehr erzeugt wird.

Die Steuereinrichtung 40 macht sich dabei zunutze, dass bei einem Aufliegen des Mobilfunkendgerätes 10 in der Ladeschale der Basisstation keine Funkverbindung zu der Basisstation aufgebaut sein muss, da gegebenenfalls Steuersignale von der Basisstation zur Steuereinrichtung 40 bzw. umgekehrt auch über die Ladekontakte K40 übertragen werden können. Hierzu ist die Steuereinrichtung 40 entsprechend ausgestaltet, so dass sie durch ein von der Basisstation über die Ladekontakte K40 zur Steuereinrichtung 40 übertragenen "Aufwecksignal" derart umgeschaltet wird, dass sie die Sendeeinrichtung 20 wieder voll in Betrieb nimmt, so dass eine Funkverbindung zwischen der Sendeeinrichtung 20 und der Basisstation aufgebaut werden kann.

Zusammengefasst schaltet die Steuereinrichtung 40 die Sende-/Empfangseinrichtung 20 ab, sobald das Mobilfunkendgerät 10 in einer Ladeschale einer Basisstation aufliegt.

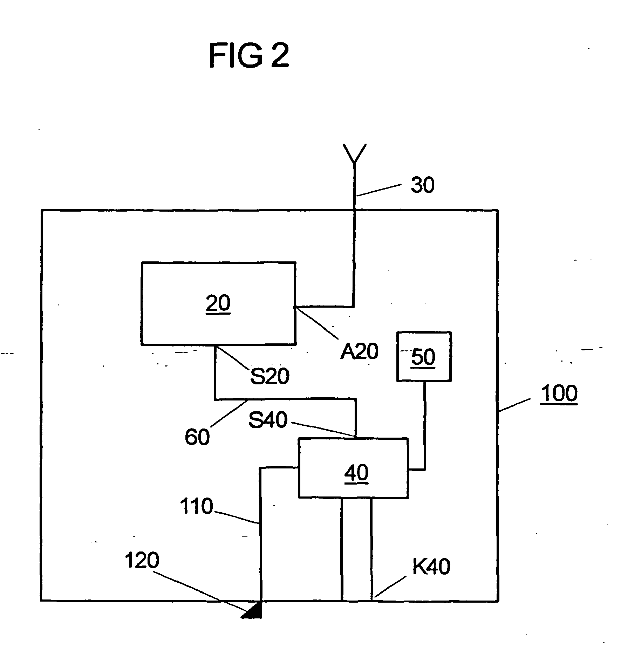

In der Figur 2 ist ein Mobilfunkendgerät 100 dargestellt, dessen Steuereinrichtung 40 mittels einer Steuerleitung 110 mit einem federnd gelagerten Schaltelement 120 verbunden ist. Sobald das Mobilfunkendgerät 100 in die Ladeschale einer Basisstation eingeführt wird, wird das elektrische Schaltelement 120 umgeschaltet. Durch dieses Umschalten des elektrischen Schaltelements 120 wird der Steuereinrichtung 40 signalisiert, dass das Mobilfunkendgerät 100 in der Ladeschale der Basisstation liegt. Sofort anschließend schaltet dann die Steuereinrichtung 40 die Sende-/Empfangseinrichtung 20 über die Steuerleitung 60 ab, so dass bei einem Aufliegen des Mobilfunkendgerätes 100 in der Ladeschale keine elektromagnetische Strahlung durch die Sende-/Empfangseinrichtung 20 generiert wird.

Im Übrigen entspricht das Mobilfunkendgerät 100 gemäß der Figur 2 dem Mobilfunkendgerät 10 gemäß der Figur 1.

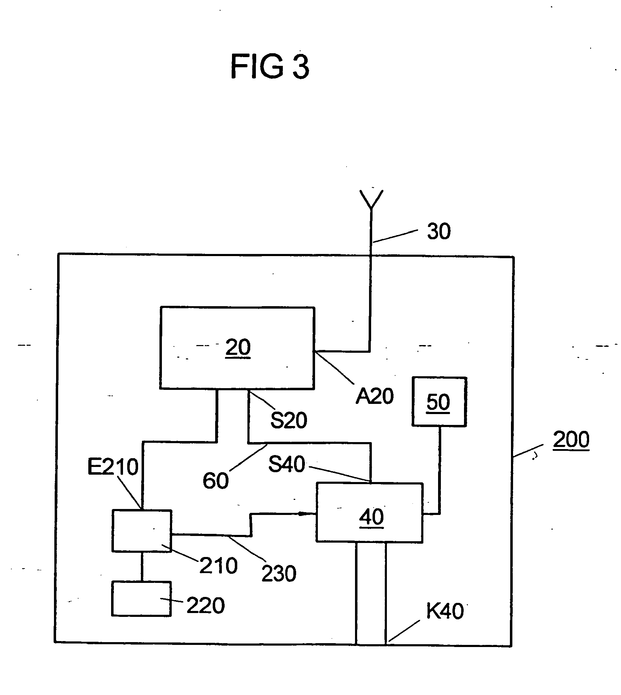

In der Figur 3 erkennt man ein Mobilfunkendgerät 200, das eine Empfangspegelmesseinrichtung 210 aufweist. Die Empfangspegelmesseinrichtung 210 ist mit einem Eingang E210 an die Sende-/Empfangseinrichtung 20 angeschlossen und misst den jeweiligen Empfangspegel der von der Sende-/Empfangseinrichtung 20 empfangenen Empfangssignale.

Die von der Empfangspegelmesseinrichtung 210 gemessenen Empfangspegel werden mit vorgegebenen, in einem mit der Empfangspegelmesseinrichtung 210 verbundenen Speicher 220 gespeicherten Referenzwerten verglichen. Je nach dem Vergleichsergebnis wird über eine Verbindungsleitung 230 zwischen der Empfangspegelmesseinrichtung 210 und der Steuereinrichtung 40 die Steuereinrichtung 40 derart angesteuert, dass diese über ihre Steuerleitung 60 der Sende-/Empfangseinrichtung 20 den jeweils einzuhaltenden Sendeleistungspegel mitteilt.

Konkret wird die Empfangspegelmesseinrichtung 210 die Steuereinrichtung 40 derart ansteuern, dass bei einem nur geringen Empfangspegel der von der Sende-/Empfangseinrichtung 20 empfangenen Signale die Sende-/Empfangseinrichtung 20 mit einer hohen Sendeleistung sendet; denn bei einem nur sehr kleinen Empfangspegel ist davon auszugehen, dass die Übertragungsverbindung zwischen dem Mobilfunkendgerät 200 und der jeweiligen Basisstation sehr schlecht ist, so dass zum Übertragen von Signalen eine hohe Sendeleistung erforderlich ist.

Stellt die Empfangspegelmesseinrichtung 210 hingegen fest, dass ein sehr hoher Empfangspegel der von der Sende-/Empfangseinrichtung 20 empfangenen Signale vorliegt, so steuert sie über die Leitung 230 die Steuereinrichtung 40 derart an, dass diese wiederum über die Steuerleitung 60 der Sende-/Empfangseinrichtung 20 eine nur geringe Sendeleistung vorgibt.

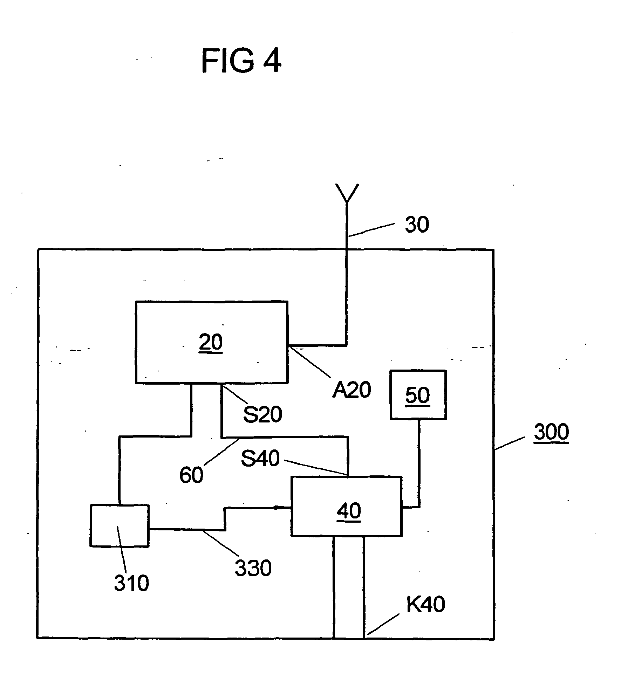

In der Figur 4 ist ein Ausführungsbeispiel für ein Mobilfunkendgerät 300 dargestellt, das mit einer Decodiereinrichtung 310 ausgestattet ist. Die Decodiereinrichtung 310 ist eingangsseitig mit der Sende-/Empfangseinrichtung 20 und ausgangsseitig mit der Steuereinrichtung 40 verbunden.

Die Decodiereinrichtung 310 wertet die von der Sende-/Empfangseinrichtung 20 empfangenen Signale der Basisstation aus und prüft, ob in den Empfangssignalen ein Steuersignal von der Basisstation enthalten ist, mit dem eine vorgegebene Sendeleistung bzw. ein vorgegebener Sendeleistungspegel für die Sende-/Empfangseinrichtung 20 des Mobilfunkendgerätes 300 enthalten ist.

Falls dies der Fall ist, so erzeugt die Decodiereinrichtung 310 ein entsprechendes Steuersignal S und überträgt dieses über die Steuerleitung 320 zu der Steuereinrichtung 40, die wiederum die Sende-/Empfangseinrichtung 20 derart ansteuert, dass die von der Basisstation vorgegebene Sendeleistung bzw. der entsprechende Sendesignalpegel von der Sende-/Empfangseinrichtung 20 eingehalten wird.

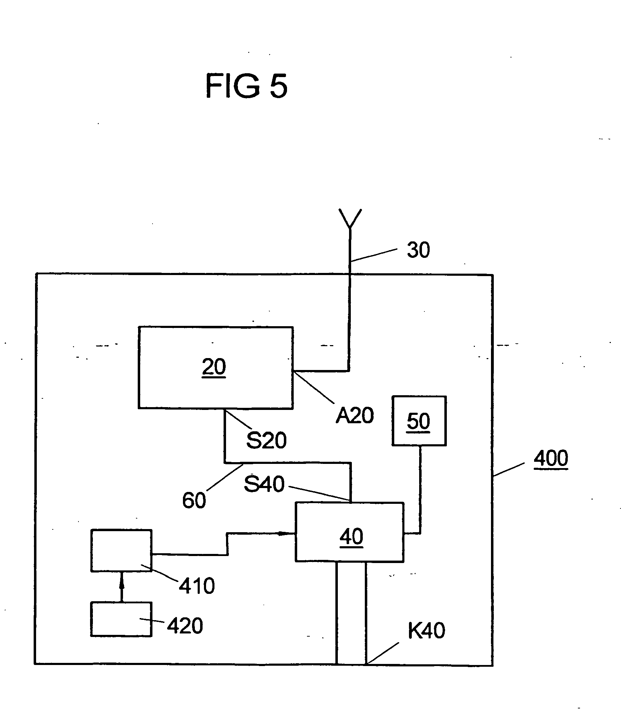

In der Figur 5 ist ein Mobilfunkendgerät 400 dargestellt, das mit einer Sprachfiltereinrichtung 410 ausgestattet ist. Die Sprachfiltereinrichtung 410 ist eingangsseitig mit einem Mikrofon 420 und ausgangsseitig mit der Steuereinrichtung 40 verbunden.

Die Funktion der Sprachfiltereinrichtung 410 besteht darin, die von dem Mikrofon 420 erzeugten Audiosignale dahingehend zu filtern, dass ausschließlich Sprachsignale zu der Steuereinrichtung 40 gelangen. Andere Audiosignale, wie beispielsweise Umgebungsrauschen und dergleichen, werden von der Sprachfiltereinrichtung 410 herausgefiltert und unterdrückt, so dass diese Audiosignalanteile nicht zu der Steuereinrichtung 40 gelangen können.

Die Steuereinrichtung 40 ist in dem Mobilfunkendgerät 400 darüber hinaus derart ausgestaltet, dass es die Sende-/Empfangseinrichtung 20 ausschließlich dann elektromagnetische Sendeleistung erzeugen lässt, wenn von der Sprachfiltereinrichtung 410 Sprachsignale "geliefert" werden. Liegen in der Steuereinrichtung 40 hingegen keine Sprachsignale seitens der Sprachfiltereinrichtung 410 vor, so steuert die Steuereinrichtung 40 die Sende-/Empfangseinrichtung 20 derart an, dass keine elektromagnetischen Wellen über die Antenne 30 abgestrahlt werden.

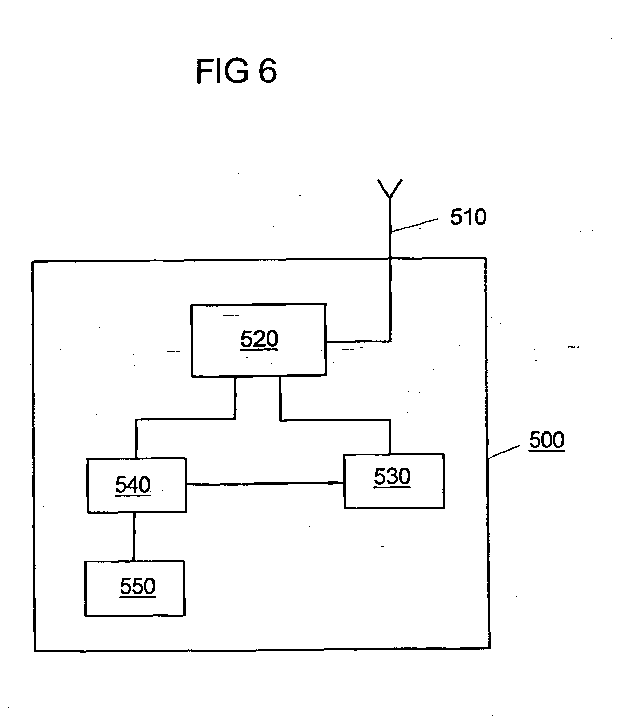

In der Figur 6 ist eine Basisstation 500 dargestellt, die eine Antenne 510, eine mit der Antenne in Verbindung stehende Senden/Empfangseinrichtung 520 und eine mit der Sende- /Empfangseinrichtung 520 verbundene Steuereinrichtung 530 aufweist.

Die Basisstation 500 ist darüber hinaus mit einer Empfangspegelmesseinrichtung 540 ausgestattet, die eingangsseitig mit der Sende-/Empfangseinrichtung 520 und ausgangsseitig mit der Steuereinrichtung 530 verbunden ist. Die Empfangspegelmesseinrichtung 540 hat die Aufgabe, die von der Sende-/Empfangseinrichtung 520 empfangenen Signale der mit der Basisstation 500 in Verbindung stehenden Mobilfunkendgeräte bezüglich des Empfangssignalpegels auszuwerten; konkret misst die Empfangspegelmesseinrichtung 540 fortlaufend die Signalpegel der empfangenen Signale und vergleicht die Empfangspegel mit in einem Speicher 550 abgespeicherten, vorgegebenen Referenzwerten.

Stellt die Empfangspegelmesseinrichtung 540 dabei fest, dass beispielsweise die gemessenen - Empfangspegel einen vorgegebenen Grenzwert unterschreiten, so steuert sie die Steuereinrichtung 530 derart an, dass diese der Sende-/Empfangseinrichtung 520 einen besonders hohen Sendepegel vorgibt. Konkret wird durch die Empfangspegelmesseinrichtung 540 erreicht, dass je nach den Sende-/Empfangsbedingungen der Übertragungsstrecke zwischen der Basisstation 500 und den angeschlossenen Mobilfunkendgeräten ein passender Sendesignalpegel für die Sende-/Empfangseinrichtung 520 eingestellt wird. Der von der Sende-/Empfangseinrichtung 520 abgegebene Sendesignalpegel ist dabei davon abhängig, wie hoch der jeweils empfangene Signalpegel der Empfangssignale ist. Ziel dieser Maßnahme ist dabei, dass stets mit der geringstmöglichen Sendeleistung gesendet wird, um die Strahlungsbelastung durch die Basisstation so gering wie möglich zu halten.

Im Übrigen kann die Basisstation 500 derart ausgestaltet sein, dass sie in Zeitintervallen, in denen keine Telefongespräche zu übertragen sind, lediglich einmal in der Sekunde Synchronisationssignale an die Mobilfunkendgeräte ausstrahlt.

Darüber hinaus kann die Basisstation 500 derart ausgestaltet sein, dass sie Sendebursts zum Synchronisieren der an die Basisstation 500 angeschlossenen Mobilfunkendgeräte ausschließlich in den Frames 0 und 8 im DECT-Standard übersendet.

In den Figuren 1 bis 6 ist die Funktionsweise des erfindungsgemäßen Mobilfunkendgerätes und der erfindungsgemäßen Basisstation anhand von schematischen Blockschaltbildern erläutert. Die gezeigten und erläuterten Blöcke können durch separate Funktionseinheiten gebildet sein; stattdessen kann die Funktion einzelner oder ggf. auch aller Blöcke durch einen oder ggf. mehrere Mikroprozessoren oder sonstige integrierte Schaltungen übernommen werden.

Bei den Mobilfunkendgeräten gemäß den Figuren 1 bis 5 handelt es sich bevorzugt um DECT-Mobilteile schnurloser DECT-Telefone. Bei der Basisstation gemäß der Figur 6 handelt es sich bevorzugt um eine DECT-Basisstation eines schnurlosen DECT-Telefons.

### Bezugszeichen

- 10: Mobilfunkendgerät
- 20: Sende-/Empfangseinrichtung
- 40: Steuereinrichtung
- 50: Akku
- 60: Steuerleitung
- 100: Mobilfunkendgerät
- 110: Leitung
- 120: Schaltelement
- 200: Mobilfunkendgerät
- 210: Empfangspegelmesseinrichtung
- 220: Speicher
- 230: Steuerleitung
- 300: Mobilfunkengerät
- 310: Decodiereinrichtung
- 320: Steuerleitung
- 400: Mobilfunkendgerät
- 410: Sprachfiltereinrichtung
- 420: Mikrofon
- 500: Basisstation
- 510: Antenne
- 520: Sende-/Empfangseinrichtung
- 530: Steuereinrichtung
- 540: Empfangspegelmesseinrichtung
- 550: Speicher
- K40: Ladekontakte
- S40: Steueranschluss
- A40: Akku-Anschluss
- A20: Antennenanschluss

## Patentansprüche

1. Mobilfunkendgerät (10, 100, 200, 300, 400) mit einer Sendeeinrichtung (20), die zumindest nach einem vorgegebenen Mobilfunkstandard, insbesondere dem DECT-Standard, arbeitet, wobei das Mobilfunkendgerät (10, 100, 200, 300, 400) zumindest zwei Betriebsarten aufweist, nämlich eine Normaletriebsart und mindestens eine weitere Betriebsart, bei der im Vergleich zur Normalbetriebsart zumindest im zeitlichen Mittel weniger elektromagnetische Strahlung erzeugt wird als in der Normalbetriebsart,
**dadurch gekennzeichnet, dass**
das Mobilfunkendgerät (10, 100) derart ausgestaltet ist, dass die Sendeeinrichtung (20) abgeschaltet wird, sobald das Mobilfunkendgerät (10, 100) mit einer Ladeschale einer dem Mobilfunkendgerät (10, 100) zugeordneten Basisstation (500) in Verbindung tritt.

2. Mobilfunkendgerät nach Anspruch 1, **dadurch gekennzeichnet, dass** das Mobilfunkendgerät (10) derart ausgestaltet ist, dass
- nach Abschalten der Sendeeinrichtung (20) Steuer- und/oder Synchronisationssignale zwischen dem Mobilfunkendgerät (10) und der Basisstation (500) über die Ladekontakte (K40) des Mobilfunkendgerätes (10) und über die Ladekontakte der Basisstation (500) übertragen werden und
- es bei Vorliegen eines von der Basisstation (500) generierten und elektrisch über die Ladekontakte (K40) von der Basisstation zum Mobilfunkendgerät (10) übertragenen Aufwecksignals den Sendebetrieb wieder aufnimmt.

3. Mobilfunkendgerät nach Anspruch 1 oder 2, **dadurch gekennzeichnet, dass** das Mobilfunkendgerät (100) einen mechanischen Schaltkontakt (120) aufweist, der bei Auflegen des Mobilfunkendgerätes (100) auf der Ladeschale oder beim Einführen des Mobilfunkendgerätes in die Ladeschale die Sendeeinrichtung (20) abschaltet.

4. Mobilfunkendgerät nach Anspruch 1 oder 2, **dadurch gekennzeichnet, dass** das Mobilfunkendgerät (10) derart ausgestaltet ist, dass es seine Sendeeinrichtung (20) abschaltet, sobald
- die Ladekontakte (K40) des Mobilfunkendgerätes (10) mit den Ladekontakten der Basisstation (500) elektrisch kontaktieren und/oder
- mobilfunkendgeräteseitig ein Ladestrom festgestellt wird und/oder
- ein Steuersignal zum Abschalten der mobilfunkendgeräteseitigen Sendeeinrichtung - insbesondere über die Ladekontakte (K40) und/oder über zusätzliche Kontakte - von der Basisstation empfangen wird.

5. Basisstation mit einer Sendeeinrichtung, die nach einem vorgegebenen Funkstandard, insbesondere dem DECT-Standard arbeitet, wobei die Basisstation (500) zumindest zwei Betriebsarten aufweist, nämlich eine Normalbetriebsart und mindestens eine weitere Betriebsart, bei der im Vergleich zur Normalbetriebsart zumindest im zeitlichen Mittel weniger Strahlung erzeugt wird als in der Normalbetriebsart,
**dadurch gekennzeichnet, dass**
die Basisstation (500) derart ausgestaltet ist, dass sie ihre Sendeeinrichtung (520) abschaltet, sobald ein Mobilfunkendgerät (10) mit der Ladeschale der Basisstation in Verbindung tritt, sofern lediglich ein einziges Mobilfunkendgerät (10) an der Basisstation angemeldet ist.

6. Basisstation nach Anspruch 5, **dadurch gekennzeichnet, dass** die Basisstation derart ausgestaltet ist, dass
- nach Abschalten der Sendeeinrichtung (520) Steuer- und/oder Synchronisationssignale zwischen dem Mobilfunkendgerät (10) und der Basisstation (500) über die Ladekontakte (K40) des Mobilfunkendgerätes (10) und über die Ladekontakten der Basisstation (500) übertragen werden und
- es zum Aufwecken der Sendeeinrichtung des Mobilfunkendgeräts ein Aufwecksignal generiert und dieses elektrisch über die Ladekontakte (K40) von der Basisstation zum Mobilfunkendgerät (10) überträgt.

7. Basisstation nach Anspruch 6, **dadurch gekennzeichnet, dass** die Basisstation (500) derart ausgestaltet ist, dass sie die Information, dass sich das Mobilfunkendgerät in der Ladeschale der Basisstation befindet, - insbesondere über die Ladekontakte und/oder über zusätzliche Kontakte - von dem Mobilfunkendgerät empfängt.

8. Basisstation nach Anspruch 6, **dadurch gekennzeichnet, dass** die Basisstation (500) derart ausgestaltet ist, dass sie den Ladestrom der Ladeschale selbst überwacht und bei Vorliegen eines Ladestroms ihre Sendeeinrichtung (520) ausschaltet.

9. Basisstation nach Anspruch 8, **dadurch gekennzeichnet, dass** die Basisstation (500) derart ausgestaltet ist, dass sie dem Mobilfunkendgerät ein Steuersignal zum Abschalten der mobilfunkendgeräteseitigen Sendeeinrichtung übermittelt.

## Claims

1. Mobile radio terminal (10, 100, 200, 300, 400) having a transmitting device (20) which operates at least in accordance with one predetermined mobile radio standard, in particular the DECT Standard, wherein the mobile radio terminal (10, 100, 200, 300, 400) has at least two operating modes, specifically a normal operating mode and at least one further operating mode, in which, in comparison with the normal operating mode and at least averaged over time, less electromagnetic radiation is produced than in the normal operating mode,
**characterized in that**
the mobile radio terminal (10, 100) is designed such that the transmitting device (20) is switched off as soon as the mobile radio terminal (10, 100) is connected to a charging shell of a base station (500) which is associated with the mobile radio terminal (10, 100).

2. Mobile radio terminal according to Claim 1, **characterized in that** the mobile radio terminal (10) is designed such that
- after the transmitting device (20) is switched off, control and/or synchronization signals are transmitted between the mobile radio terminal (10) and the base station (500) via the charging contacts (K40) of the mobile radio terminal (10) and via the charging contacts of the base station (500), and
- transmitting mode is resilient when a wake-up signal is present which is generated by the base station (500) and is transmitted electrically via the charging contacts (K40) from the base station to the mobile radio terminal (10).

3. Mobile radio terminal according to Claim 1 or 2, **characterized in that** the mobile radio terminal (100) has a mechanical switching contact (120) which switches off the transmitting device (20) when the mobile radio terminal (100) is placed on the charging shell or the mobile radio terminal is inserted into the charging shell.

4. Mobile radio terminal according to Claim 1 or 2, **characterized in that** the mobile radio terminal (10) is designed such that it switches off its transmitting device (20) as soon as
- the charging contacts (K40) of the mobile radio terminal (10) make electrical contact with the charging contacts of the base station (500), and/or
- a charging current is detected at the mobile radio terminal end, and/or
- a control signal is received to switch off the transmitting device at the mobile radio terminal end - in particular via the charging contacts (K40) and/or via additional contacts - from the base station.

5. Base station having a transmitting device which operates in accordance with a predetermined radio standard, in particular the DECT Standard, wherein the base station (500) has at least two operating modes, specifically a normal operating mode and at least one further operating mode, in which in comparison with the normal operating mode and at least averaged over time, less radiation is produced than in the normal operating mode,
**characterized in that**
the base station (500) is designed such that its transmitting device (520) switches off as soon as a mobile radio terminal (10) is connected to the charging shell of the base station, when only a single mobile radio terminal (10) is registered with the base station.

6. Base station according to Claim 5, **characterized in that** the base station is designed such that
- after the transmitting device (520) has been switched off, control and/or synchronization signals are transmitted between the mobile radio terminal (10) and the base station (500) via the charging contacts (K40) of the mobile radio terminal (10) and via the charging contacts of the base station (500), and
- a wake-up signal is generated in order to wake up the transmitting device in the mobile radio terminal, and is transmitted electrically via the charging contacts (K40) from the base station to the mobile radio terminal (10).

7. Base station according to Claim 6, **characterized in that** the base station (500) is designed such that it receives the information that the mobile radio terminal is located in the charging shell of the base station - in particular via the charging contacts and/or via additional contacts - from the mobile radio terminal.

8. Base station according to Claim 6, **characterized in that** the base station (500) is designed such that it itself monitors the charging current of the charging shell, and switches off its transmitting device (520) when a charging current is present.

9. Base station according to Claim 8, **characterized in that** the base station (500) is designed such that it transmits a control signal to the mobile radio terminal to switch off the transmitting device at the mobile radio terminal end.

## Revendications

1. Terminal mobile de communication radio (10, 100, 200, 300, 400) avec un dispositif d'émission (20) fonctionnant au moins selon une norme de téléphonie mobile préalablement prévue, notamment la norme DECT, le terminal mobile de communication radio (10, 100, 200, 300, 400) comportant au moins deux modes de fonctionnement, notamment un mode de fonctionnement normal et au moins un autre mode de fonctionnement émettant un rayonnement électromagnétique moins important que le mode de fonctionnement normal au moins en moyenne dans le temps, **caractérisé en ce que** le terminal mobile de communication radio (10, 100) est réalisé de telle sorte que le dispositif d'émission (20) est déconnecté dès que le terminal mobile de communication radio (10, 100) est relié à une coque de chargement d'une station de base (500) associée au terminal mobile de communication radio (10, 100).

2. Terminal mobile de communication radio selon la revendication 1, **caractérisé en ce que** le terminal mobile de communication radio (10) est réalisé de telle sorte que :
- après déconnexion du dispositif d'émission (20), les signaux de commande et/ou de synchronisation entre le terminal mobile de communication radio (10) et la station de base (500) sont transmis via les contacts de charge (K40) du terminal mobile de communication radio (10) et via les contacts de charge de la station de base (500) ; et
- le mode d'émission est relancé en présence d'un signal de réveil généré par la station de base (500) et transmis électriquement de la station de base au terminal mobile de communication radio (10) via les contacts de charge (K40).

3. Terminal mobile de communication radio selon la revendication 1 ou 2, **caractérisé en ce que** le terminal mobile de communication radio (100) comporte un contact de commutation (120) mécanique qui déconnecte le dispositif d'émission (20) lorsque le terminal mobile de communication radio (100) est placé sur sa coque de chargement ou que le terminal mobile de communication radio est introduit dans la coque de chargement.

4. Terminal mobile de communication radio selon la revendication 1 ou 2, **caractérisé en ce que** le terminal mobile de communication radio (10) est réalisé de telle sorte qu'il déconnecte son dispositif d'émission (20) dès que :
- les contacts de charge (K40) du terminal mobile de communication radio (10) entrent en contact avec les contacts de charge de la station de base (500) ; et/ou
- un courant de charge est détecté du côté du terminal mobile de communication ; et/ou
- un signal de commande est reçu par la station de base pour déconnecter le dispositif d'émission situé côté terminal mobile de communication - notamment via les contacts de charge (K40) et/ou via des contacts supplémentaires.

5. Station de base avec un dispositif d'émission fonctionnant selon une norme de transmission radio préalablement prévue, notamment la norme DECT, la station de base (500) comportant au moins deux modes de fonctionnement, notamment un mode de fonctionnement normal et au moins un autre mode de fonctionnement dans lequel un rayonnement moins important qu'en mode de fonctionnement normal est produit au moins en moyenne dans le temps, **caractérisée en ce que** la station de base (500) est réalisée de telle sorte qu'elle déconnecte son dispositif d'émission (520) dès qu'un terminal mobile de communication radio (10) entre en liaison avec la coque de chargement de la station de base, dans la mesure où un seul terminal mobile de communication radio (10) est enregistré au niveau de la station de base.

6. Station de base selon la revendication 5, **caractérisée en ce que** la station de base est réalisée de telle sorte que :
- une fois le dispositif d'émission (520) déconnecté, les signaux de commande et/ou de synchronisation sont transmis entre le terminal mobile de communication radio (10) et la station de base (500) via les contacts de charge (K40) du terminal mobile de communication radio (10) et via les contacts de charge de la station de base (500) ; et
- un signal de réveil est généré pour réveiller le dispositif d'émission du terminal mobile de communication radio et celui-ci est transmis de façon électrique de la station de base au terminal mobile de communication radio (10) via les contacts de charge (K40).

7. Station de base selon la revendication 6, **caractérisée en ce que** la station de base (500) est réalisée de telle sorte qu'elle reçoit rapidement du terminal mobile de communication radio les informations concernant la présence du terminal mobile de communication radio dans la coque de chargement de la station de base - notamment via les contacts de charge et/ou via les contacts supplémentaires.

8. Station de base selon la revendication 6, **caractérisée en ce que** la station de base (500) est réalisée de telle sorte qu'elle surveille elle-même le courant de charge de la coque de chargement et déconnecte son dispositif d'émission (520) en présence d'un courant de charge.

9. Station de base selon la revendication 8, **caractérisée en ce que** la station de base (500) est réalisée de telle sorte qu'elle transmet au terminal mobile de communication radio un signal de commande pour déconnecter le dispositif d'émission situé du côté du terminal mobile de communication.
